Europäisches Patentamt

European Patent Office

Office européen des brevets

(19)

(11) Veröffentlichungsnummer: **0 232 809 B1**

(12) **EUROPÄISCHE PATENTSCHRIFT**

(45) Veröffentlichungstag der Patentschrift: **06.11.91**

(51) Int. Cl.⁵: **H02J 3/42**

(21) Anmeldenummer: **87101263.9**

(22) Anmeldetag: **30.01.87**

(54) **Verfahren und Einrichtung zum Parallelschalten von Abzweigen mit Synchrongeneratoren oder solche enthaltenden Netzteilen.**

(30) Priorität: **13.02.86 DE 3604512**

(43) Veröffentlichungstag der Anmeldung:
**19.08.87 Patentblatt 87/34**

(45) Bekanntmachung des Hinweises auf die
Patenterteilung:
**06.11.91 Patentblatt 91/45**

(84) Benannte Vertragsstaaten:
**AT BE CH DE ES FR GB IT LI NL SE**

(56) Entgegenhaltungen:
**GB-A- 2 055 262**

**ELEKTROTECHNISCHE ZEITSCHRIFT E.T.Z.,
Band 105, Nr. 14, Juli 1984, Seiten 726-735,
Berlin, DE; D. OEDING et al.: "Mikroelektronik
in der Energietechnik"**

**NEUES AUS DER TECHNIK, Nr. 6, Dezember
1981, Seite 644, Würzburg, DE; "Durch Mikrocomputer gesteuerte Netzwerksynchronisationsanordnung"**

(73) Patentinhaber: **SIEMENS AKTIENGESELL-
SCHAFT**
**Wittelsbacherplatz 2**
**W-8000 München 2(DE)**

(72) Erfinder: **Leibold, Helmut, Dipl.-Ing.(FH)**
**Saubertstrasse 3**
**W-8500 Nürnberg(DE)**

## Beschreibung

Die Erfindung betrifft ein Verfahren zum Parallelschalten von Abzweigen mit Synchrongeneratoren oder solche enthaltenden Netzteilen nach dem Oberbegriff des Patentanspruchs 1 sowie Einrichtungen zur Durchführung des Verfahrens.

Bei den bekannten analogarbeitenden Ausführungen zum Parallelschalten, die gemäß dem Verfahren des Oberbegriffs des Patentanspruchs 1 arbeiten, ist eine zentrale Parallelschalteinrichtung vorgesehen, die über aufwendige Übertragungs-, Meß- und Steuerungskanäle mit den einzelnen Abzweigen oder Netzteilen verbunden werden, wozu eine entsprechende Vielzahl von Verbindungsleitungen und Anwahlrelais benötigt werden.

Aus der GB-A-2 055 262 ist ein Sychronisiergerät zum Synchronisieren und Zusammenschalten zweier Netzteile, insbesondere eines Generators mit einem Netzabzweig, bekannt. Dabei werden Spannungssignale der beiden Netzteile auf Spannungs-, Frequenz- und Winkelgleichheit überprüft. In Abhängigkeit hiervon werden gegebenenfalls Steuersignale für den Generator und ein Leistungsschalter-Schaltbefehl zum Verbinden der Netzteile gebildet. Eine Anwahl eines Abzweiges oder eine Berücksichtigung von Schaltstellungen ist nicht vorgesehen.

Der Erfindung liegt die Aufgabe zugrunde, ein sicheres und mit vereinfachten Einrichtungen durchführbares Parallelschaltverfahren der eingangs genannten Art zu schaffen, das mit weniger Verbindungsleitungen und ohne Auswahlrelais auskommt.

Die Lösung der gestellten Aufgabe gelingt durch die kennzeichnenden Merkmale des Patentanspruchs 1. Eine zusätzliche Erweiterung des Signaltelegramms und/oder eine noch niedrigere Datenrate ist dabei entsprechend dem Anspruch 2 möglich. Eine Ausgestaltung gemäß Anspruch 3 ist besonders einfach.

Zur Durchführung des erfindungsgemäßen digitalen Verfahrens nach den Ansprüchen 1, 2 oder 3 eignen sich besonders Einrichtungen nach den weiteren Ansprüchen.

Es können dabei wegen der maximal benötigten seriellen Datenübertragungsrate von nur 19,2 kBaud Kupferleitungen als serielle Verbindungen völlig ausreichen. Gewünschtenfalls können aber auch Lichtwellenleiter (Glasfaserleiter) Verwendung finden.

Für die üblichen Abzweige mit Trennern, Leistungsschaltern und Generatoren samt Antrieben ist jeweils ein Abzweiggerät zur Erfassung der Abzweigspannung als Meßspannung und der Trennerstellung zur Bildung des Signaltelegramms sowie für Spannungs- und Frequenzabgleichsignale für den Generator und die Antriebsmaschine und schließlich für Schaltbefehle für den betreffenden Leistungsschalter des zuzuschaltenden Abzweiges vorgesehen. Das Abzweiggerät des zum Vergleich dienenden eingeschalteten Abzweiges erfaßt nur die betreffende Abzweigspannung und die Trennerstellung zur Bildung eines zu vergleichenden Signaltelegramms im Zentralgerät. Die beiden Signaltelegramme werden dem computerisierten Zentralgerät zugeführt und dort zur Bildung von Abgleichsignalen ausgewertet. Die Abgleichsignale werden ihrerseits den Abzweiggeräten zugeführt, wobei nur das Abzweiggerät des zuzuschaltenden Abzweiges eine entsprechende Beeinflussung des zugeordneten Generatorbetriebs vornimmt, was sich in Änderungen der Meßwerte äußert. Der vorgenannte Vorgang wiederholt sich solange, bis keine Abgleichsignale mehr notwendig sind und ein Schaltsignal im Zentralgerät ausgelöst werden kann, das über die seriellen Verbindungen im betreffenden Abzweiggerät in einen Schaltbefehl für den Leistungsschalter des Abzweiges umgesetzt wird. Die Abzweig- und Zentralgeräte können dabei zur Erhöhung der Sicherheit vorzugsweise redundant ausgeführt und entsprechend miteinander über serielle Verbindungen verbunden sein.

Das Abzweiggerät des zuzuschaltenden Abzweiges kann selbst unmittelbar auf die Zuschaltung vorbereitet oder im Zentralgerät angewählt werden, wobei dem Zentralgerät die Meßwerte des zuzuschaltenden Abzweiges sowie die zu vergleichenden Meßwerte der Sammelschienen und/oder der übrigen Netzteile zur Erzeugung und Verarbeitung von Schaltsignalen zugeführt werden. Es ist dabei unterstellt, daß das Zentralgerät jeweils immer nur einen Synchronisiervorgang bewältigen soll, das heißt, daß nur die Meßwerte zweier Abzweiggeräte im Zentralgerät gleichzeitig bearbeitet werden sollen. Die jeweilige Abzweigspannung wird durch einen Meßwandler angepaßt und danach gefiltert.

Bei redundanter Ausführung der Abzweig- und Zentralgeräte besteht die Erkennungsmöglichkeit von ungewollten Anschlußvertauschungen an den Meßwandlern für die Spannungsübertragungen. Ferner besteht die Möglichkeit, bei Messung über Transformatoren für die Abzweige auf Zwischenwandler zum Ausgleich des Einflußes der Transformatorschaltgruppen auf die Meßwerte zu verzichten.

Ein Schaltgruppenausgleich kann bei nur einem Abzweiggerät je Abzweig und einem einzigen Zentralgerät auch dadurch ermöglicht werden, daß der Nulldurchgang der Abzweigspannung entsprechend zeitverzögert ausgewertet wird.

Das Verfahren sowie die zu seinen Durchführungen dienende Einrichtung nach der Erfindung ist anhand eines Ausführungsbeispiels nachfolgend näher erläutert.

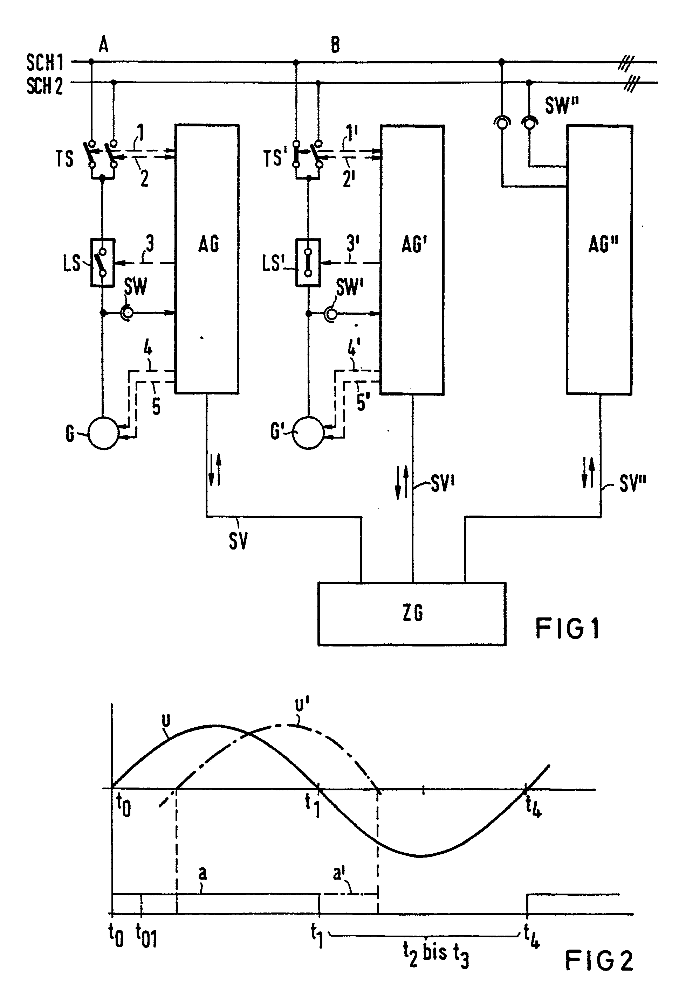

In der Zeichnung, Fig. 1 ist schematisch eine Anlage mit zwei gleichen Abzweigen, die über Trenner wahlweise mit zwei Sammelschienen verbindbar und durch Leistungsschalter parallel schaltbar sind. Jedem Abzweig ist ein Abzweiggerät gleicher Ausführung zugeordnet. Außerdem ist für die Spannungserfassung der Sammelschienen über Spannungswandler ein abgewandeltes Abzweiggerät vorgesehen und alle Abzweiggeräte sind mit einem Zentralgerät über serielle Verbindungen verbunden, das die Nachbildung der Anlage führt.

Fig. 2 zeigt die Auswertung des Spannungshalbschwingungen gleicher Polarität und

Fig. 3 schematisch ein Abzweiggerät in Verbindung mit dem Zentralgerät.

Gemäß Fig. 1 sind zwei mit Generatoren G und G′ samt nicht dargestellten Antrieben versehene Abzweige A, B über Leistungsschalter LS, LS′ sowie Trenner TS, TS′ an Sammelschienen SCH1, SCH2 anschaltbar und jedem Abzweig ist ein Abzweiggerät AG bzw. AG′ zugeordnet. Ein drittes Abzweiggerät AG″ ist über Spannungswandler SW″ mit den Sammelschienen verbunden. Die Ausgänge der Abzweiggeräte sind über serielle Verbindungen SV, SV′ und SV″ mit einem gemeinsamen Zentralgerät ZG gekoppelt.

Die Abzweiggeräte AG, AG′ sind ihrerseits mit den Trennern TS, TS′ zur Erfassung der Trennerstellungen über Stellungsmeldungsleiter 1, 2 bzw. 1′, 2′; die Leistungsschalter LS, LS′ über Steuerleiter 3 bzw. 3′ und ferner die Generatoren mit ihren Antriebsmaschinen über Spannungs- und Frequenzabgleichsleiter 4, 5 bzw. 4′, 5′ verbunden.

Es ist unterstellt, daß der Generator G dem bereits an die Sammelschiene SCH1 angeschlossenen Generator G′ parallelgeschaltet werden soll.

Die Abzweigspannungen der beiden Abzweige A, B werden jeweils dem Abzweiggerät AG, AG′ zugeführt und dort in nachfolgend für das Abzweiggerät AG näher beschriebener Weise ausgewertet.

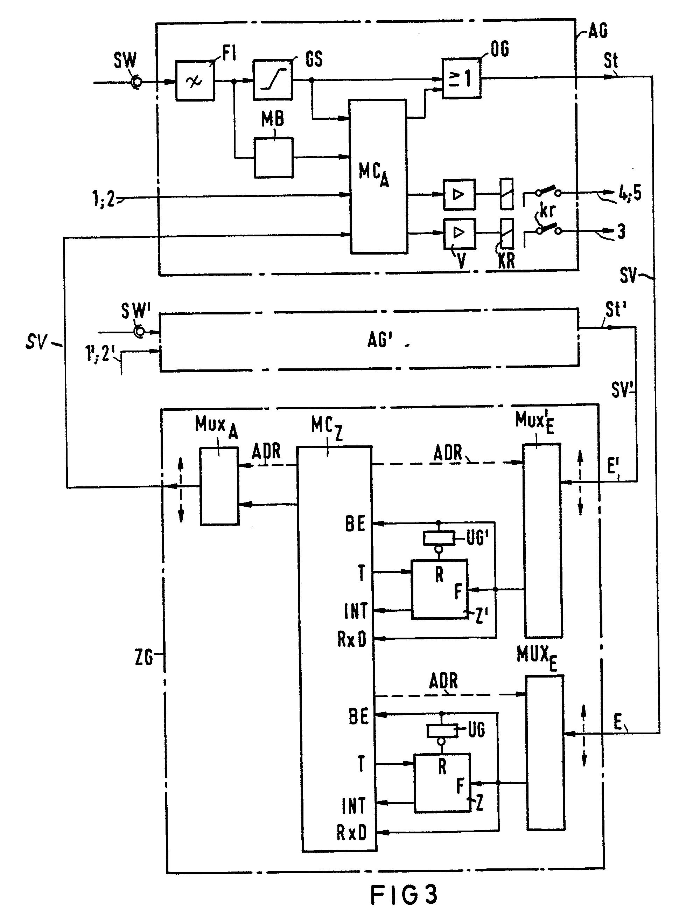

Das Abzweiggerät AG weist einen mit dem Spannungswandler SW gekoppelten Eingangsfilter FI auf, der mit einer Grenzwertstufe GS sowie einem Mittelwertbildner MB verbunden ist (siehe Figur 3). Mit den Ausgängen der Grenzwertstufe GS und des Mittelwertbildners MB sind Eingänge eines Mikrocomputers $MC_A$ mit Umsetzer gekoppelt, der die Ausgangswerte der Grenzwertstufe GS und des Mittelwertbildners MB in serielle Daten eines Signaltelegramms umsetzt. Der Ausgang des Umsetzers ist auf ein ODER-Glied OG geführt, das außerdem direkt mit dem Ausgang der Grenzwertstufe GS verbunden ist. Die Ausgangsgröße St des ODER-Gliedes OG in Form eines Signaltelegramms wird über die serielle Verbindung SV auf den Eingang E des Zentralgerätes ZG geführt. Die Ausgangsgröße St′ des Abzweiggerätes AG′ gelangt auf den Eingang E′ des Zentralgerätes ZG.

Die Grenzwertstufe GS verwandelt die positive Halbschwingung der gefilterten Spannung u nach Fig. 2 in ein Rechtecksignal a, das unmittelbar dem Zentralgerät ZG zur Ermittlung der Frequenz zugeführt wird. Der im Mittelwertsbildner MB ermittelte Amplitudenwert der Abzweigspannung wird zusammen mit Trennerstellungssignalen 1, 2 (1′, 2′) im Mikrocomputer $MC_A$ in das erwähnte Signaltelegramm St umgewandelt und dieses im Zeitabstand zwischen zwei Rechtecksignalen a auf das Zentralgerät übertragen. Entsprechendes gilt für das Signaltelegramm St′ des Abzweiggerätes AG′.

Der Umsetzer wird jeweils kurz nach Beginn der negativen Halbschwingung der Spannung u bzw. u′ bis kurz vor Beginn der folgenden positiven Spannungshalbschwingung freigegeben. Die Grenzwertstufen sind dabei so ausgelegt, daß ihr Ausgangssignal kurz nach dem Nulldurchgang wechselt; ihre Hysterese ist so eingestellt, daß der Rückfall des Ausgangswertes möglichst genau nach einer halben Spannungsperiode erfolgt.

Die Mittelwertsbildung kann ohne Bewertung des Vorzeichens beispielsweise mit einem 8-Bit-Analog-Digitalwandler mit ausreichender Genauigkeit vorgenommen werden. Der besagte Umsetzer wird vom Zentralgerät ZG gesteuert, wenn dort die Synchronisieranforderung gegeben wird, wobei die betreffende serielle Verbindung SV ständig zur Verfügung steht und das Synchronisiersignal mit bekannter Telegrammsicherung auf den entsprechenden Eingang des Mikrocomputers $MC_A$ übertragen werden kann, der ausgangsseitig nach Verstärkung (Verstärker V) ein Kommandorelais KR mit den üblichen Sicherheitsvorkehrungen einschließlich Freigabesignal ansteuert, wobei dessen Relaiskontakte kr einen Schaltbefehl für den Leistungsschalter LS überträgt.

Bei Ausgabe der Synchronisieranforderung vom Abzweig selbst sind enstprechende Signale auf das Zentralgerät ZG zu übertragen. Bei Nichtvorliegen einer Synchronisieranforderung in der Zentrale ist es vorteilhaft, daß das Zentralgerät fortlaufend alle Abzweiggeräte nach dem Vorliegen von Synchronisieranforderungen abfragt.

Im Zentralgerät ZG sind zur Kopplung beliebiger Abzweiggeräte entsprechend anwählbare Multiplexer $Mux_E$, $Mux_E$′ am Eingang eines Mikrocomputers $MC_Z$ sowie ein Multiplexer $Mux_A$ an dessen Ausgang vorgesehen, die vom Mikrocomputer über ADR entsprechend adressiert werden, so daß die eingangsseitige Verbindung des Zentralgerätes ZG mit den Ausgängen der Abzweiggeräte AG, AG′ der beiden parallel zu schaltenden Abzweige A, B gekoppelt werden und der Ausgang des Zentralgerätes ZG mit dem Abzweiggerät AG des zuzuschaltenden Abzweigs A verbunden wird.

Der jeweilige Ausgang der beiden Multiplexer $Mux_E$, $Mux_E$′ ist jeweils direkt mit der Binärsignaleingabe BE sowie mit dem Eingang für serielle Daten R x D verbunden. Außerdem ist der Ausgang dieser Multiplexer unmittelbar an die Freigabeeingänge F von Zählschaltungen Z, Z' und über je ein Umkehrglied UG, UG' an deren Rückstellungseingang R angeschlossen. Die Zählschaltungen Z, Z' sind jeweils mit Taktsteuerausgängen T sowie mit Unterbrechereingängen INT des Mikrocomputers MC$_Z$ verbunden, dessen Ausgang über den Multiplexer Mux$_A$ und die serielle Verbindung SV auf den Signaleingang des Mikrocomputers MC$_A$ im Abzweiggerät AG arbeitet.

Nach der Ausgabe des Synchronisiersignals werden die Rechteckspannungen a, a' (Fig. 2) sowie im Zeitraum zwischen die besagten Signaltelegramme St, St' über die Multiplexer Mux$_E$, Mux$_E$' und die Zählschaltungen Z, Z' dem Mikrocomputer MC$_Z$ zugeführt. Die Zählschaltungen können die Unterscheidung zwischen positiver Halbschwingung und Signaltelegramm dadurch bewirken, daß bei Auftreten eines Dauersignals während der positiven Halbschwingung die jeweilige Zählschaltung freigegeben, und im Takt inkrementiert wird. Die Zählschaltungen Z, Z' werden dabei so eingestellt, daß sie vor Ablauf der kürzestmöglichen positiven Halbschwingung beispielsweise "überlaufen" und dabei ein Unterbrechungssignal an den Mikrocomputer MC$_Z$ geben und jeweils in einen Zusatzzähler im Computer MC$_Z$ bis zum Ende der besagten Halbschwingung weitergezählt wird. Während der negativen Halbschwingung ankommende Signaltelegramme St, St' können die Zählschaltungen Z, Z' nicht zum Ablauf bringen, da diese beim nächsten empfangenen Bit (z.B. mit Signal L) sofort in die Ausgangsstellung zurückgesetzt werden. Es ist dabei vorteilhaft, mit den Zusatzzählern über die ganze positive Halbschwingung zu zählen, soweit dies die höchstzulässige Netzfrequenz zuläßt. Das Ende jeder positiven Halbschwingung erkennt der Computer am Signalwechsel, wozu der Unterbrechungseingang INT dient. Sofern der Zusatzzähler im Mikrocomputer MC$_Z$ mit gleicher Frequenz wie die Zählschaltung Z, Z' betrieben wird, können die Zählvorgänge auch in anderer Weise auf beide verteilt werden.

Es ist auch möglich, den Zähler über eine ganze positive Halbschwingung zählen zu lassen und den Zählwert in den Computer zu übernehmen. Es ist ferner möglich, für solche Aufgaben im Computer sowieso für andere Aufgaben vorgesehene Zähler mitzuverwenden.

Durch die Zählschaltungen können die Signaltelegramme miteinander verglichen und die Spannungsfrequenz und gegebenenfalls die Winkeldifferenzen ermittelt und daraus Frequenz- und Spannungsabgleichssignale sowie weitere Meßwerte für die Ermittlung des Schaltzeitpunktes gewonnen werden.

Die Frequenz- und Abgleichssignale werden im Mikrocomputer MC$_A$ in entsprechende Steuersignale für den Generatorantrieb und den Spannungsregler des Generators umgesetzt und gehen in die Abzweigspannung und -frequenz ein. Der Vorgang wiederholt sich solange, bis im Zentralgerät ein Schaltsignal gebildet und auf den Mikrocomputer des Abzweiggerätes AG übertragen wird, der dort in einen Steuerbefehl mittels Verstärkung und Relaisschaltung umgewandelt wird.

Die direkte Übertragung der Rechtecksignale und der serielle anschließende Übertrag der ebenfalls die Halbschwingungsdauer beinhaltenden Signaltelegramme ergibt eine Kontrolle der richtigen Übertragung der Halbschwingungsdauer zum Zentralgerät, das aus dem jeweiligen Abstand der aufeinanderfolgenden gleichpoligen rechteckförmigen Halbschwingungen die Periodendauer und dadurch die Frequenz der Abzweigspannung ermitteln kann.

## Patentansprüche

1. Verfahren zum Parallelschalten von Abzweigen (A,B) mit Synchrongeneratoren (G) oder solche enthaltenden Netzteilen unter Erfassung und Auswertung der betreffenden Spannungen, Frequenzen sowie der Winkellagen der Netzteile für die Ermittlung von Spannungs-, Frequenz- und Winkeldifferenzen zur Bildung von Spannungs- und Frequenzabgleichssignalen sowie zur Berechnung des Einschaltzeitpunktes für den zuzuschaltenden Abzweig (A,B) oder Netzteil unter Berücksichtigung der Schaltstellung eines jeweils zugeordneten Trenners (TS,TS'), **dadurch gekennzeichnet,** daß aus den gefilterten Meßspannungen (u,u') jedes Abzweigs (A,B) oder Netzteils gleichpolige Spannungshalbschwingungen gebildet und aus diesen die Spannungsamplituden ermittelt und gespeichert werden, daß aus den Spannungshalbschwingungen gleichzeitig eine an den Anfangs-Nulldurchgang angrenzendes und mindestens einem Teil der jeweiligen Spannungshalbschwingung entsprechendes Rechtecksignal (a,a') erzeugt wird, daß die so erhaltenen Spannungsamplituden und Rechtecksignale zusammen mit Trennerstellungssignalen als digitale Signaltelegramme über je eine den einzelnen parallelzuschalten den Abzweigen oder Netzteilen zugeordnete serielle Verbindung (SV,SV',SV") zur zentralen Ermittlung der Frequenzen weitergeleitet werden, daß die Spannungsamplituden zusammen mit den Trennerstellungssignalen jeweils zumindest während der entgegengesetztpoligen Spannungshalbschwingungen als Signaltelegramme seriell zur zentralen Bildung von über die zugeordnete serielle Verbindung (SV,SV',SV") zurückzuübertragenden Spannungs- und Frequenzabgleichssignalen übertragen werden, und daß bei Erreichen von ausreichend kleinen Spannungs-, Frequenz- und Winkeldifferenzen nach entsprechend oft wiederholten seriellen Signalübertragungen in beiden Richtungen der zentral gebildete und über die zugeordnete serielle Verbindung übertragene Schaltbefehl den zuzuschaltenden Abzweig (A,B) bzw. Netzteil einschaltet.

2. Verfahren nach Anspruch 1, **dadurch gekennzeichnet,** daß der von dem Rechtecksignal (a,a') nicht benutzte Bereich der gleichpoligen Spannungshalbschwingung zusätzlich für die Signaltelegrammübertragung benutzt wird.

3. Verfahren zum Parallelschalten nach Anspruch 1, **dadurch gekennzeichnet,** daß das Rechtecksignal (a,a') der jeweiligen Spannungshalbschwingung (u,u') entspricht.

4. Einrichtung zur Durchführung des Verfahrens nach Anspruch 1, 2 oder 3, **dadurch gekennzeichnet,** daß jedem Abzeig (A,B) ein computerisiertes Abzweiggerät (AG,AG',AG") zum Erfassen von Meßspannungen (u,u') und Trennerstellungen zugeordnet ist, daß jedes Abzweiggerät ein Filter (FI) für die Meßspannungen (u,u') und Mittel zum Auswerten der betreffenden Spannungen und Frequenzen, zum Bilden (GS) von gleichpoligen Spannungshalbschwingungen, zum Ermitteln (MB) und Speichern (MC$_A$) der Spannungsamplituden sowie zum Bilden (GS) von an den Anfangs-Nulldurchgang der Spannung angrenzenden Rechtecksignalen (a,a') und zum Bilden (MC$_A$,OG) von digitalen Signaltelegrammen (ST,ST') aufweist, daß weiter jedes Abzweiggerät (AG,AG',AG") über serielle Verbindungen (SV,SV',SV") mit einem anwählbaren, die Abbildung der Anlage führenden computerisierten Zentralgerät (ZG) verbunden ist, daß das Zentralgerät (ZG) zum Ermitteln (MC$_Z$) von jeweiligen Frequenzen der Abzweige, von Spannungs-, Frequenz und Winkeldifferenzen und daraus abgeleiteten Spannungs- und Frquenzabgleichssignalen zur Rückübertragung (MUX$_A$) an das betreffende Abzweiggerät (AG,AG',AG") oder Netzteil ausgebildet ist, und daß das Zentralgerät (ZG) weiter Mittel zum Berechnen (MC$_Z$) des Einschaltzeitpunktes für den zuzuschaltenden Abzweig (A,B) oder Ntzteil und zum Bilden eines Schaltbefehls (MC$_Z$,MUX$_A$) aufweist.

5. Einrichtung nach Anspruch 4, **dadurch gekennzeichnet,**

daß in jedem Abzweiggerät (AG, AG' ) eine dem Filter (FI) nachgeordnete Grenzwertstufe (GS) zur Erfassung der Dauer der Spannungshalbschwingungen gleicher Polarität, ein Mittelwertbildner (MB) zur Amplitudenermittlung der betreffenden Spannungshalbschwingungen, ein zählerbestückter Computer (MC$_A$) für die Bildung des Signaltelegramms (St) sowie ein ausgangsseitiges ODER-Glied (OG) vorgesehen sind, so daß das ODER-Glied (OG) mit dem Ausgang der Grenzwertstufe (GS) und mit dem Signaltelegramm-Ausgang des Computers (MC$_A$) sowie mit der seriellen Verbindung (SV) zum Zentralgerät (ZG) verbunden ist, wobei der Ausgang des Mittelwertbildners und der Grenzwertstufe auf gesonderte Eingänge des Computers (MC$_A$ ) geführt sind und die Computer in den Abzweiggeräten (AG, AG' ) für schaltbare Abzweige (A, B) zusätzliche Computer-Eingänge und -Ausgänge für Abgleichssignale und Schaltbefehle, sowie Eingänge für die Schalterstellungserfassung im Signaltelegramm aufweisen.

6. Einrichtung nach Anspruch 4 oder 5, **dadurch gekennzeichnet,**

daß die Computerausgänge für die Abgleichssignale und Schaltbefehle über Verstärker (V) mit entsprechenden Schaltrelais (KR) verbunden ist.

7. Einrichtung nach Anspruch 4 oder 5, **dadurch gekennzeichnet,**

daß das Zentralgerät (ZG) zur jeweiligen Anwahl an die Abzweiggeräte (AG, AG') zweier gewünschter parallelzuschaltender Abzweige (A, B) oder Netzteile eingangsseitig zwei entsprechend adressierbare Multiplexer (Mux$_E$) und ausgangsseitig einen auf den jeweils zuzuschaltenden Abzweig oder Netzteil adressierbaren Multiplexer (Mux$_A$) aufweist, die mit einem adressierenden zählerbestücktem Computer (MC$_Z$) verbunden sind, wobei der Ausgang des Computers (MC$_Z$) über den Multiplexer (Mux$_A$) zur Übertragung der Abgleichssignale sowie des Schaltbefehls mit den beiden Computern (MC$_A$) der Abzweiggeräte (AG, AG') über die seriellen Verbindungen (SV) gekoppelt ist und die Signaltelegramme (St, St') der Abzweiggeräte (AG, AG') über die zugeordneten eingangsseitigen Multiplexer (Mux$_E$,Mux$_E$') direkt auf gesonderte Befehlseingaben (BE) und RxD-Eingänge des Computers (MC$_Z$), sowie auf Rückstellund Freigabeeingänge (R, F) von Zählerschaltungen (Z, Z') geführt sind, die ihrerseits mit Taktsteuer- und Unterbrechungseingängen des Computers (MC$_Z$) verbunden sind.

**8.** Einrichtung nach einem der vorhergehenden Ansprüche 4 bis 7,
**dadurch gekennzeichnet,**
daß je Abzweig (A,B) mehrere Abzweiggeräte (AG,AG',AG") vorgesehen und über serielle Verbindungen (SV,SV',SV") mit mehreren Zentralgeräten (ZG) verbunden sind.

**Claims**

**1.** A method for the parallel connection of branches (A,B) with synchronous generators (G) or power supply units containing such with detection and evaluation of the relevant voltages, frequencies and angular positions of the power supply units for determining voltage, frequency and angular differences for formation of voltage- and frequency-compensating signals, as well as for calculating the switch-on point in time for the branch (A,B) or power supply unit to be connected-in, taking into account the switch position of a respective associated isolator (TS, TS'), characterised in that from the filtered measurement voltages (u, u') of each branch (A,B) or each power supply unit, unipolar voltage half waves are formed and from these, voltage amplitudes are detected and stored, in that from the voltage half waves a square-wave signal (a, a'), corresponding at least to one part of the respective voltage half wave and adjacent to the initial zero crossing, is simultaneously generated, in that the voltage amplitudes and square-wave signals thus obtained are conveyed further, together with the isolator position signals as digital signal messages, by way of a serial connection (SV, SV', SV"), allocated respectively to one of the individual branches or power supply units to be connected in parallel for central determining of frequencies, in that the voltage amplitudes are transferred in series together with the isolator position signals in each case at least during the voltage half waves of opposite polarity as signal messages for the central formation of voltage- and frequency-compensating signals to be transferred back via the associated serial connection (SV', SV', SV"), and in that when obtaining sufficiently small voltage, frequency and angular differences after correspondingly often repeated serial signal transfers in both directions, the centrally formed switching command, transferred by means of the associated serial connection, connects the branch (A,B) or power supply unit to be connected.

**2.** A method according to claim 1, characterised in that the region of the unipolar voltage half wave not used by the square-wave signal (a,a') is used additionally for the signal message transfer.

**3.** A method for parallel connection according to claim 1, characterised in that the square-wave signal (a,a') corresponds to the respective voltage half wave (u,u').

**4.** A device for carrying-out the method according to claim 1, 2 or 3, characterised in that a computerised branch apparatus (AG, AG', AG") for detecting measurement voltages (u, u') and isolator positions is allocated to each branch (A,B), in that each branch apparatus has a filter (FI) for the measurement voltages (u, u') and means for evaluating the relevant voltages and frequencies, for forming (GS) unipolar voltage half waves, for determining (MB) and storing (MC$_A$) the voltage amplitudes as well as for forming (GS) square-wave signals (a, a'), adjacent to the initial zero crossing of the voltage and for forming (MC$_A$, OG) digital signal messages (ST, ST'), in that furthermore each branch apparatus (AG, AG', AG") is connected by means of serial connections (SV, SV', SV") to a selectable, computerised central apparatus (ZG), guiding the modelling of the unit, in that the central apparatus (ZG) is constructed for the determination (MC$_Z$) of respective frequencies of the branches, of voltage, frequency and angular differences and voltage- and frequency-compensating signals, derived therefrom, for return transfer (MUX$_A$) to the relevant branch apparatus (AG, AG', AG") or power supply unit, and in that the central apparatus (ZG) has further means for calculating (MC$_Z$) the switch-on point in time for the branch (A, B) or power supply unit to be connected and for forming a switching command (MC$_Z$, MUX$_A$).

**5.** A device according to claim 4, characterised in that in each branch apparatus (AG, AG') there are provided a limiting value stage (GS), after the filter (FI), for detecting the duration of the voltage half waves of the same polarity, an average value generator (MB) for determining the amplitude of the relevant voltage half wave, a computer (MC$_A$) fitted with a counter for the formation of the signal message (St) as well as an OR-gate (OG) on the output side, so that the OR-gate (OG) is connected to the output of the limiting value stage (GS) and to the signal message output of the computer (MC$_A$) as well as to the serial connection (SV) to the central apparatus (ZG), wherein the output of the average value generator and the limiting value stage are fed to separate inputs of the computer (MC$_A$) and the computers in the branch apparatus (AG, AG') for connectable branches (A,B) have additional computer inputs and outputs for compensating signals and switching commands as well as inputs for the switch position detection in the signal message.

6. A device according to claim 4 or 5, characterised in that the computer outputs for the compensating signals and switching commands are connected by way of amplifiers (V) to corresponding switch relays (KR).

7. A device according to claim 4 or 5, characterised in that the central apparatus (ZG) for the respective selection of the branch apparatus (AG, AG') of two desired parallel-connected branches (A,B) or power supply units has on the input side two correspondingly addressable multiplexers (Mux$_E$) and on the output side a multiplexer (Mux$_A$) which is addressable to the branch or power supply unit to be connected, which are connected to an addressing computer (MC$_Z$) fitted with a counter, wherein the output of the computer (MC$_Z$) is coupled with both computers (MC$_A$) of the branch apparatuses (AG,AG') by way of the serial connections (SV), through the multiplexer (Mux$_A$) for transferring the compensating signals and the switching command, and the signal messages (St, St') of the branch apparatuses (AG, AG') are guided via the associated input-side multiplexer (Mux$_E$, Mux$_E$') directly to separate command inputs (BE) and RxD inputs of the computer (MC$_Z$), as well as reset and release inputs (R,F) of counter circuits (Z, Z'), which are connected for their part with clock control and interruption inputs of the computer (MC$_Z$).

8. A device according to one of the preceding claims 4 to 7, characterised in that several branch apparatuses (AG, AG', AG") are provided per branch (A,B) and are connected to several central apparatuses (ZG) by way of serial connections (SV, SV', SV").

**Revendications**

1. Procédé pour brancher en parallèle des dérivations (A, B) comportant des générateurs synchrones (D) ou des parties du secteur contenant de tels générateurs, moyennant la détermination ainsi que l'évaluation des tensions et fréquences considérées et des positions angulaires des parties du secteur pour la détermination de différences de tension, de différences de fréquence et de différences angulaires pour former des signaux de compensation de tension et de fréquence ainsi que pour calculer l'instant de branchement de la dérivation (A, B) ou l'élément de réseau, devant être raccordé, en tenant compte de la position de commutation d'un sectionneur respectivement associé (TS, TS'), caractérisé par le fait que des alternances de tension de même polarité sont formées à partir des tensions de mesure filtrées (u,u') de chaque dérivation (A, B) ou partie du secteur et que les amplitudes de tension sont déterminées à partir de ces alternances et sont mémorisées, et qu'à partir des alternances de tension est formé simultanément un signal rectangulaire (a,a'), qui est contigu à l'annulation initiale et correspond au moins à une partie de l'alternance de tension respective, que les amplitudes de tension et les signaux rectangulaires, qui sont ainsi obtenus, ainsi que les signaux de position des sectionneurs sont retransmis sous la forme de télégrammes de signaux numériques par l'intermédiaire respectivement d'une liaison série (SV, SV', SV"), qui est associée aux différentes dérivations ou parties du secteur, devant être branchées en parallèle, pour la détermination centrale des fréquences, que les amplitudes de tension ainsi que les signaux de position des sectionneurs sont transmis en série respectivement au moins pendant les alternances de polarités opposées de la tension en tant que télégrammes de signaux pour former, d'une manière centralisée, des signaux de compensation de tension et de fréquence devant être transmis en retour par l'intermédiaire de la liaison en série associée (SV, SV', SV"), et que, lorsque des différences de tension, des différences de fréquence et des différences angulaires suffisamment faibles sont atteintes après des transmissions en série de signaux, répétées avec une fréquence correspondante, dans les deux directions, l'instruction de commutation formée d'une manière centralisée et transmise par l'intermédiaire de la liaison série associée branche la dérivation (A, B) ou la partie du secteur, est raccordée.

2. Procédé suivant la revendication 1, caractérisé par le fait que la plage, non utilisée par le signal rectangulaire (a,a'), de l'alternance de tension de même polarité est utilisée en supplément pour la transmission de télégrammes de signaux.

3. Procédé de branchement en parallèle suivant la revendication 1, caractérisé par le fait que le signal rectangulaire (a,a') correspond à l'alternance respective de tension (u,u').

4. Dispositif pour la mise en oeuvre du procédé suivant la revendication 1, 2 ou 3, caractérisé par le fait qu'à chaque dérivation (A,B) est associé un appareil de dérivation (AG, AG', AG") équipé d'un ordinateur et servant à détecter des tensions de mesure (u,u') et des positions de sectionneurs, que chaque appareil de dérivation comporte un filtre (FI) pour les tensions de mesure (u,u') et des moyens pour évaluer les tensions et fréquences considérées, pour former (GS) des alternances de tension de même polarité, pour déterminer (MB) et mémoriser ($MC_A$) les amplitudes de tension ainsi que pour former (GS) des signaux rectangulaires (a,a') contigus à l'annulation initiale de la tension et pour former ($MC_A$, $OG_A$) des télégrammes de signaux numériques (ST, ST'), qu'en outre chaque appareil de dérivation (AG, AG', AG") est raccordé, par l'intermédiaire de liaisons en série (SV, SV', SV"), à un appareil central (ZG), équipé d'un ordinateur et qui peut être sélectionné et commande la configuration de l'installation, que l'appareil central (ZG) est agencé pour déterminer ($MC_Z$) des fréquences respectives des dérivations, des différences de tension, des différences de fréquence et des différences angulaires et des signaux de compensation de tension et de fréquence, qui sont tirés de ces différences, pour transmettre en retour ($MUX_A$) ces signaux à l'appareil de dérivation (AG, AG', AG") de la partie considérée du secteur, et que l'appareil central (ZG) comporte en outre des moyens pour calculer ($MC_Z$) l'instant de branchement pour la dérivation (A,B) ou la partie du secteur, qui doit être raccordée, et pour former une instruction de commutation ($MC_Z$, $MUX_A$).

5. Dispositif suivant la revendication 4, caractérisé par le fait que dans chaque appareil de dérivation (AG, AG') est prévu un étage à valeur limite (GS) branché en aval du filtre (FI) et servant à détecter la durée des alternances de tension de même polarité, un dispositif (MB) de formation de la valeur moyenne servant à déterminer l'amplitude des alternances de tension considérée, un ordinateur ($MC_A$) équipé d'un compteur servant à former le télégramme de signaux (St), ainsi qu'un circuit OU (OG) situé du côté sortie, de sorte que le circuit OU (OG) est raccordé à la sortie de l'étage à valeur limite (GS) et à la sortie du télégramme de signaux de l'ordinateur ($MC_A$) ainsi qu'à la liaison série (SV) aboutissant à l'appareil central (ZG), la sortie du dispositif de formation de la valeur moyenne et la sortie de l'étage à valeur limite étant raccordées à des entrées particulières de l'ordinateur ($MC_A$), et les ordinateurs situés dans les appareils de dérivation (AG, AG') comportant, pour des dérivations commutables (A, B), des entrées et des sorties supplémentaires pour des signaux de compensation et des signaux de commutation, ainsi que des entrées pour la détermination de la position des interrupteurs dans le télégramme de signaux.

6. Dispositif selon la revendication 4 ou 5, caractérisé par le fait que les sorties de l'ordinateur pour les signaux de compensation et pour les instructions de commutation sont raccordées par des amplificateurs (V) à des relais de commutation correspondants (KR).

7. Dispositif suivant la revendication 4 ou 5, caractérisé par le fait que pour réaliser la sélection des appareils de dérivation (AG, AG') de deux dérivations (A, B) ou parties du secteur désirées, devant être branchées en parallèle, l'appareil central (ZG) comporte, côté entrée, deux multiplexeurs ($Mux_E$) devant être adressés de façon correspondante et, côté sortie, des multiplexeurs adressables ($Mux_A$), qui sont raccordés à un ordinateur ($MC_Z$) équipé d'un compteur et réalisant l'adressage, la sortie du compteur ($MC_Z$) étant accouplée par l'intermédiaire du multiplexeur ($Mux_A$) pour la transmission des signaux de compensation ainsi que de l'instruction de commutation, aux deux ordinateurs ($MC_A$) des appareils de dérivation (AG, AG'), par l'intermédiaire des liaisons série (SV) et que les télégrammes de signaux (St, St') des appareils de dérivation (AG, AG') sont raccordés directement, par l'intermédiaire des multiplexeurs associés ($Mux_E$, $Mux_E$') situés sur le côté entrée, à des entrées particulières d'instructions (BE) et à des entrées RxD de l'ordinateur ($MC_Z$), ainsi qu'à des entrées de remise à zéro et de libération (R,F) de circuits de comptage (Z, Z'), qui sont raccordés, pour leur part, à des entrées de commande de cadence et d'interruption de l'ordinateur ($MC_Z$).

8. Dispositif suivant l'une des revendications précédentes 4 à 16, caractérisé par le fait que plusieurs appareils de dérivation (AG, AG', AG") sont prévus pour chaque dérivation (A,B) et sont raccordés, par des liaisons série (SV, SV', SV"), à plusieurs appareils centraux (ZG).

FIG 1

FIG 2

FIG 3